(19) Europäisches Patentamt
European Patent Office
Office européen des brevets

(11) EP 0 844 280 B1

(12) EUROPEAN PATENT SPECIFICATION

(45) Date of publication and mention of the grant of the patent: **20.03.2002 Bulletin 2002/12**

(51) Int Cl.[7]: **C08L 23/10**, C08J 5/18 // (C08L23/10, 23:08, 23:14)

(21) Application number: **97120753.5**

(22) Date of filing: **26.11.1997**

# (54) Polypropylene resin compositions

Polypropylen Zusammensetzung

Composition de polypropylène

(84) Designated Contracting States:
**CH DE FR GB IT LI NL**

(30) Priority: **26.11.1996 JP 31524896**

(43) Date of publication of application:
**27.05.1998 Bulletin 1998/22**

(73) Proprietor: **Mitsui Chemicals, Inc.**
**Tokyo 100 (JP)**

(72) Inventors:
- **Tanaka, Yasuo**
  **Ichihara-shi, Chiba 299-01 (JP)**
- **Sugi, Masahiro**
  **Ichihara-shi, Chiba 299-01 (JP)**
- **Nakagawa, Norihiko**
  **Ichihara-shi, Chiba 299-01 (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 353 981**
**EP-A- 0 716 121**
**WO-A-92/14784**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to polypropylene resin compositions, and more particularly to polypropylene resin compositions which exhibit excellent heat-sealing strength, low-temperature impact resistance, transparency, blocking resistance and slip properties when they are used in the form of films.

### BACKGROUND OF THE INVENTION

Polypropylene resins have excellent rigidity and heat resistance, but have a defect of poor impact resistance, particularly poor impact resistance at low temperatures. To remove this defect, it is well known to blend the polypropylene resins with a rubber component comprising an ethylene/propylene random copolymer or an ethylene/butene random copolymer.

In the conventional polypropylene resin compositions, however, the dispersed particles of the rubber component such as the ethylene/propylene random copolymer or the ethylene/butene random copolymer are large, so that a film of the composition does not have sufficiently high heat-sealing strength. For this reason, it is difficult to obtain a composition capable of producing films of good balance between the heat-sealing properties and the impact resistance. Besides, the conventional compositions suffer bad transparency.

In order to improve the balance between the heat-sealing properties and the impact resistance of films, blending of the propylene resin with an ethylene/α-olefin random copolymer and further a propylene/α-olefin random copolymer has been proposed in Japanese Patent Laid-Open Publication No. 43242/1989.

EP-A-716 121 describes a composition of polypropylene and a propylene-butene copolymer with a low molecular weight distribution and high randomness.

Even if the above blending is performed, however, the balance between the heat-sealing properties and the impact resistance, the transparency and the blocking resistance of films of the resulting blend are still insufficient.

Accordingly, development of polypropylene resin compositions capable of producing films having not only excellent heat-sealing properties but also excellent impact resistance, in particular low-temperature impact resistance, transparency and blocking resistance has been desired.

### OBJECT OF THE INVENTION

The present invention is intended to solve such problems associated with the prior arc as described above, and it is a main object of the invention to provide a polypropylene resin composition capable of producing films and sheets having not only excellent heat sealing properties but also excellent impact resistance, in particular low-temperature impact resistance, transparency, blocking resistance, blushing resistance and scratch resistance.

### SUMMARY OF THE INVENTION

The polypropylene resin composition according to the present invention is a polypropylene resin composition comprising

(a) 50-99 wt.-% of a polypropylene resin (A) and

(b) 50-1 wt.-% of a rubber component (B) comprising

b1) an ethylene random copolymer (B1) of ethylene and a $C_{3-20}$ α-olefin, and having the following properties:

(1-1) a density of 0.850-0.900 g/cm$^3$,

(2-1) a melt flow rate (ASTM D 1238, 190°C, 2.16kg load) of 0.1-30 g/10 min, and

(3-1) a degree of crystallinity, measured by X-ray diffractometry, of less than 40%; and

(b2) a propylene/1-butene random copolymer (B2) containing 50-95 mol-% of constituent units derived from propylene and 5-50 mol-% of constituent units derived from 1-butene, and having the following properties:

(1-2) a melt flow rate (ASTM D 1238, 230°C, 2.16 kg load) of 0.1-50g/10 min,

(2-2) a molecular weight distribution (Mw/Mn), determined by GPC, of not more than 3.0, and

(3-2) a B-value, indicating the randomness of the copolymerized monomer sequence distribution, of 1.0-1.5, wherein $B = P_{12}/(2P_1 \times P_2)$, where $P_1$ is the molar fraction of the first monomer, $P_2$ is a the molar fraction of the second monomer fraction and $P_{12}$ is the proportion of the first monomer-second monomer sequences to all the dyad sequences;

and the weight ratio (B1)/(B2) of the ethylene random copolymer (B1) to the propylene/1-butene random copolymer (B2) in the rubber component (B) is in the range of 95/5 to 20/80.

The ethylene random copolymer (B1) is, for example, a linear ethylene/α-olefin random copolymer.

This linear ethylene/α-olefin random copolymer preferably has the following properties:

(a) the density is in the range of 0.850 to 0.900 g/cm$^3$,

(b) the intrinsic viscosity (η), as measured in decahydronaphthalene (decalin) at 135 °C, is in the range of 0.3 to 3.0 dl/g,

(c) the glass transition temperature (Tg) is not higher than -50 °C,

(d) the crystallinity, as measured by X-ray diffractometry, is less than 40 %,

(e) the molecular weight distribution (Mw/Mn), as determined by GPC, is not more than 3.0,

(f) the parameter B value, which indicates randomness of a copolymerized monomer sequence distribution, is in the range of 1.0 to 1.4, and

(g) the ratio gη* of the intrinsic viscosity (η) determined as the property (b) to the intrinsic viscosity $(\eta)_{blank}$ of a linear ethylene/propylene copolymer having the same weight-average molecular weight (measured by a light scattering method) as this copolymer and having an ethylene content of 70 % by mol, $(\eta)/(\eta)_{blank}$, is more than 0.95.

The linear ethylene/α-olefin random copolymer is preferably an ethylene/α-olefin random copolymer obtained by random copolymerizing ethylene and an α-olefin of 6 to 20 carbon atoms in the presence of a metallocene catalyst comprising a metallocene compound represented by the following formula (I) or (II).

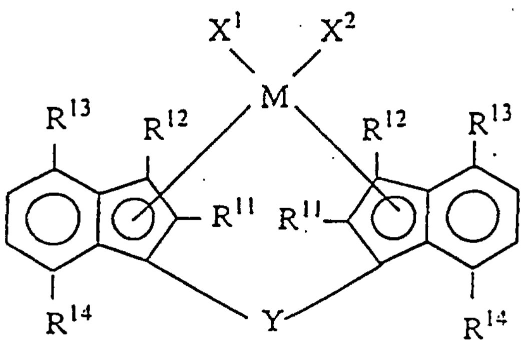

(I)

wherein M is a transition metal of Group IVB of the periodic table,

$R^{11}$ and $R^{12}$ are each a hydrogen atom, a halogen atom, a hydrocarbon group of 1 to 20 carbon atoms which may be substituted with halogen, a silicon-containing group, an oxygen-containing group, a sulfur-containing group, a nitrogen-containing group or aphosphorus-containing group,

$R^{13}$ and $R^{14}$ are each an alkyl group of 1 to 20 carbon atoms,

$X^1$ and $X^2$ are each a hydrogen atom, a halogen atom, a hydrocarbon group of 1 to 20 carbon atoms, a halogenated hydrocarbon group of 1 to 20 carbon atoms, an oxygen-containing group or a sulfur-containing group, and

Y is a divalent hydrocarbon group of 1 to 20 carbon atoms, a divalent halogenated hydrocarbon group of 1 to 20 carbon atoms, a divalent silicon-containing group, a divalent germanium-containing group, -O-, -CO-, -S-, -SO-, $-SO_2-$, $-NR^7-$, $-P(R^7)-$, $-P(O)(R^7)-$, $-BR^7-$ or $-AlR^7-$ ($R^7$ is a hydrogen atom, a halogen atom, a hydrocarbon group of 1 to 20 carbon atoms or a halogenated hydrocarbon group of 1 to 20 carbon atoms; or

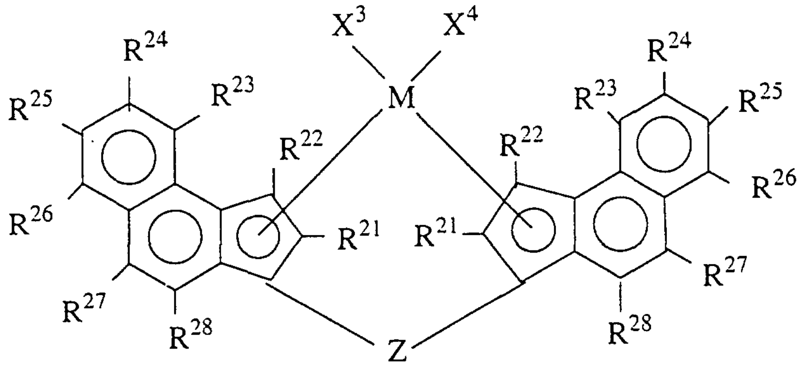

(II)

wherein M is a transition metal of Group IVB of the periodic table,

the groups $R^{21}$ may be the same or different, and are each a hydrogen atom, a halogen atom, an alkyl group of 1 to 10 carbon atoms which may be halogenated, an aryl group of 6 to 10 carbon atoms, $-NR_2$, -SR, $-OSiR_3$, $-SiR_3$ or $-PR_2$ (R is a halogen atom, an alkyl group of 1 to 10 carbon atoms or an aryl group of 6 to 10 carbon atoms),

$R^{22}$ to $R^{28}$ are each the same as $R^{21}$, or adjacent groups of $R^{22}$ to $R^{28}$ may form an aromatic ring or an aliphatic ring together with the atoms to which they are bonded,

$X^3$ and $X^4$ may be the same or different, and are each a hydrogen atom, a halogen atom, OH group, an alkyl group of 1 to 10 carbon atoms, an alkoxy group of 1 to 10 carbon atoms, an aryl group of 6 to 10 carbon atoms, an aryloxy group of 6 to 10 carbon atoms, an alkenyl group of 2 to 10 carbon atoms, an arylalkyl group of 7 to 40 carbon atoms, an alkylaryl group of 7 to 40 carbon atoms or an arylalkenyl group of 8 to 40 carbon atoms, and

Z is

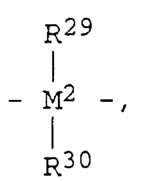

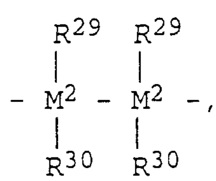

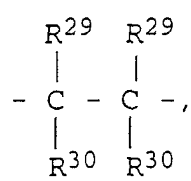

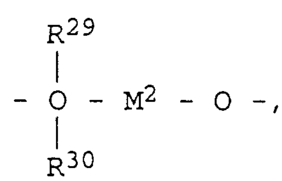

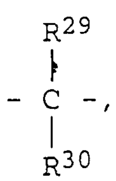

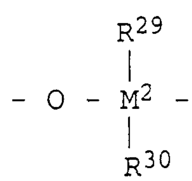

$=BR^{29}$, $=AlR^{29}$, -Ge-, -Sn-, -O-, -S-, =SO, $=SO_2$, $=NR^{29}$, =CO, $=PR^{29}$ or $=P(O)R^{29}$ ($R^{29}$ and $R^{30}$ may be the same or different, and are each a hydrogen atom, a halogen atom, an alkyl group of 1 to 10 carbon atoms, a fluoroalkyl group of 1 to 10 carbon atoms, an aryl group of 6 to 10 carbon atoms, a fluoroaryl group of 6 to 10 carbon atoms, an alkoxy group of 1 to 10 carbon atoms, an alkenyl group of 2 to 10 carbon atoms, an arylalkyl group of 7 to 40 carbon atoms, an arylalkenyl group of 8 to 40 carbon atoms or an alkylaryl group of 7 to 40 carbon atoms, or $R^{29}$ and $R^{30}$ may form a ring together with the atoms to which they are bonded, and $M^2$ is silicon, germanium or tin).

The ethylene random copolymer (B1) may also be a long-chain branched ethylene/α-olefin random copolymer.

The long-chain branched ethylene/α-olefin random copolymer preferably has the following properties:

(a) the density is in the range of 0.850 to 0.900 g/cm³,

(b) the intrinsic viscosity (η), as measured in decalin at 135 °C, is in the range of 0.3 to 3.0 dl/g,

(c) the glass transition temperature (Tg) is not higher than -50 °C,

(d) the crystallinity, as measured by X-ray diffractometry, is less than 40 %,

(e) the molecular weight distribution (Mw/Mn), as determined by GPC, is not more than 3.0,

(f) the parameter B value, which indicates randomness of a copolymerized monomer sequence distribution, is in the range of 1.0 to 1.4, and

(g) the ratio $g\eta^*$ of the intrinsic viscosity ($\eta$) determined as the property (b) to the intrinsic viscosity $(\eta)_{blank}$ of a linear ethylene/propylene copolymer having the same weight-average molecular weight (measured by a light scattering method) as this copolymer and having an ethylene content of 70.% by mol, $(\eta)/(\eta)_{blank}$, is in the range of 0.2 to 0.95.

The long-chain branched ethylene/α-olefin random copolymer is preferably an ethylene/α-olefin random copolymer obtained by random copolymerizing ethylene and an α-olefin of 3 to 20 carbon atoms in the presence of a metallocene catalyst comprising a metallocene compound represented by the following formula (III):

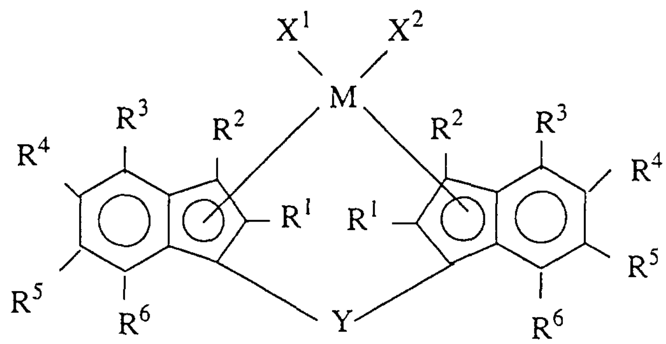

(III)

wherein M is a transition metal of Group IVB of the periodic table,

$R^1$ is a hydrocarbon group of 1 to 6 carbon atoms,

$R^2$, $R^4$, $R^5$ and $R^6$ may be the same or different, and are each a hydrogen atom, a halogen atom or a hydrocarbon group of 1 to 6 carbon atom,

$R^3$ is an aryl group of 6 to 16 carbon atoms, which may be substituted with either a halogen atom, a hydrocarbon group of 1 to 20 carbon atoms or an organosilyl group,

$X^1$ and $X^2$ are each a hydrogen atom, a halogen atom, a hydrocarbon group of 1 to 20 carbon atoms, a halogenated hydrocarbon group of 1 to 20 carbon atoms, an oxygen-containing group or a sulfur-containing group, and

Y is a divalent hydrocarbon group of 1 to 20 carbon atoms, a divalent halogenated hydrocarbon group of 1 to 20 carbon atoms, a divalent silicon-containing group, a divalent germanium-containing group, -O-, -CO-, -S-, -SO-, $-SO_2-$, $-NR^7-$, $-P(R^7)-$, $-P(O)(R^7)-$, $-BR^7-$ or $-AlR^7-$ ($R^7$ is a hydrogen atom, a halogen atom, a hydrocarbon group of 1 to 20 carbon atoms or a halogenated hydrocarbon group of 1 to 20 carbon atoms).

The propylene/1-butene random copolymer (B2) preferably has the parameter B value (property (4)), which indicates randomness of a copolymerized monomer sequence distribution, of 1.0 to 1.3;

and further has the following properties:

(5) the melting point Tm, as measured by a differential scanning calorimeter, is in the range of 60 to 140 °C, and the melting point Tm and the 1-butene constituent unit content M (% by mol) satisfy the relation

$$-2.6M + 130 \leq Tm \leq -2.3M + 155,$$

and

(6) the crystallinity C (%), as measured by X-ray diffractometry, and the 1-butene constituent unit content M (% by mol) satisfy the relation

$$C \geq -1.5M + 75.$$

The propylene/1-butene random copolymer (B2) can be obtained by copolymerizing propylene and 1-butene in the presence of an olefin polymerization catalyst comprising:

(e) a transition metal compound represented by the following formula (IV):

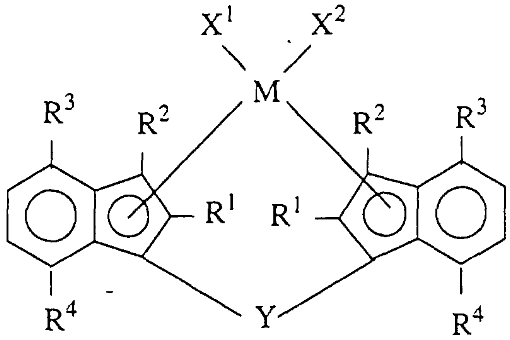

(IV)

wherein M is a transition metal of Group IVB, VB or VIB of the periodic table,
$R^1$ and $R^2$ are each a hydrogen atom, a halogen atom, a hydrocarbon group of 1 to 20 carbon atoms, a halogenated hydrocarbon group of 1 to 20 carbon atoms, a silicon-containing group, an oxygen-containing group, a sulfur-containing group, a nitrogen-containing group or a phosphorus-containing group,
$R^3$ is a secondary or tertiary alkyl group of 3 to 20 carbon atoms or an aromatic group,
$R^4$ is a hydrogen atom or an alkyl group of 1 to 20 carbon atoms,
$X^1$ and $X^2$ are each a hydrogen atom, a halogen atom, a hydrocarbon group of 1 to 20 carbon atoms, a halogenated hydrocarbon group of 1 to 20 carbon atoms, an oxygen-containing group or a sulfur-containing group, and
Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$, $-NR^3-$, $-P(R^3)-$, $-P(O)(R^3)-$, $-BR^3-$ or $-AlR^3-$ ($R^3$ is a hydrogen atom, a halogen atom, a hydrocarbon group of 1 to 20 carbon atoms or a halogenated hydrocarbon group of 1 to 20 carbon atoms),

(f) an organoaluminum oxy-compound (f-1) and/or a compound (f-2) which reacts with the transition metal compound (e) to form an ion pair,
and optionally
(g) an organoaluminum compound.

$R^1$ in the formula (IV) is preferably methyl.

## DETAILED DESCRIPTION OF THE INVENTION

The polypropylene resin composition according to the invention is described in detail hereinafter.
The polypropylene resin composition of the invention comprises a polypropylene resin (A) and a rubber component (B) which comprises an ethylene random copolymer (B1) and a propylene/1-butene random copolymer (B2).

### Polypropylene resin (A)

The polypropylene resin (A) for use in the invention is a homopolymer of propylene or a random or block copolymer of propylene and another $\alpha$-olefin such as ethylene or 1-butene. The polypropylene resin (A) generally contains propylene constituent units in amounts of not less than 90 % by mol and is desired to have a boiling n-heptane-insoluble fraction of not less than 90 %, preferably not less than 93 %.
The polypropylene resin (A) can typically be prepared by the use of a catalyst formed from a solid titanium catalyst component and an organometallic compound catalyst component or a catalyst formed from the both components and an electron donor.
Examples of the solid titanium catalyst components include titanium trichloride, a titanium trichloride composition, and a supported titanium catalyst component containing magnesium, halogen, an electron donor (preferably an aromatic carboxylic acid ester or an alkyl group-containing ether) and titanium as essential ingredients, prepared by any methods. Of these, particularly preferable is a supported titanium catalyst component having a specific surface

area of preferably not less than 100 $m^2$/g.

The organometallic compound catalyst component is preferably an organoaluminum compound, and examples thereof include trialkylaluminum, dialkylaluminum halide, alkylaluminum sesquihalide and alkylaluminum dihalide. The suitability of these compounds as the catalyst components depends upon the type of the titanium catalyst component used, so that it is preferable to appropriately select the organoaluminum compound according to the type of the titanium catalyst component used.

The electron donor is an organic compound containing, for example, nitrogen, phosphorus, sulfur, oxygen, silicon or boron, and preferred examples thereof include esters and ethers.

The polypropylene resin (A) for use in the invention can be prepared in accordance with known methods using conventional solid titanium catalyst components or metallocene compound catalyst components.

The polypropylene resin (A) can be used singly or in combination of two or more kinds.

The polypropylene resin (A) is used in an amount of 50 to 99 % by weight, preferably 60 to 95 % by weight, more preferably 70 to 90 % by weight, based on 100 % by weight of the total amount of the polypropylene resin (A) and the rubber component (B).

Rubber component (B)

The rubber component (B) for use in the invention comprises an ethylene random copolymer (B1) and a propylene/1-butene random copolymer (B2).

In the rubber component (B), the weight ratio ((B1)/(B2)) of the ethylene random copolymer (B1) to the propylene/1-butene random copolymer (B2) is in the range of 95/5 to 20/80, preferably 90/10 to 40/60, more preferably 80/20 to 50/50.

The rubber component (B) is used in an amount of 50 to 1 % by weight, preferably 40 to 5 % by weight, more preferably 30 to 10 % by weight, based on 100 % by weight of the total amount of the polypropylene resin (A) and the rubber component (B).

Ethylene random copolymer (B1)

The ethylene random copolymer (B1) for use in the invention comprises ethylene and an $\alpha$-olefin of 3 to 20 carbon atoms.

Examples of the $\alpha$-olefins of 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and mixtures thereof. Of these, preferable are $\alpha$-olefins of 3 to 10 carbon atoms, and particularly preferable are $\alpha$-olefins of 3 to 8 carbon atoms.

The ethylene random copolymer (B1) has a density of 0.850 to 0.900 g/$cm^3$, preferably 0.850 to 0.888 g/$cm^3$, more preferably 0.850 to 0.885 g/$cm^3$. When the ethylene random copolymer (B1) has a density in this range, the low-temperature impact resistance can be much improved.

The ethylene random copolymer (B1) has a melt flow rate (ASTM D 1238, 190 °C, load of 2.16 kg) of 0.1 to 30 g/10 min, preferably 3 to 20 g/10 min. The ethylene random copolymer (B1) having a melt flow rate in this range shows good dispersibility in the polypropylene resin (A).

The ethylene random copolymer (B1) has a crystallinity, as measured by X-ray diffractometry, of less than 40 %. When the ethylene random copolymer (B1) has a crystallinity of less than 40 %, the impact resistance can be much improved.

The ethylene random copolymer (B1) can be used singly or in combination of two or more kinds.

The ethylene random copolymer (B1) can be prepared by random copolymerizing ethylene and an $\alpha$-olefin of 3 to 20 carbon atoms in the presence of an olefin polymerization catalyst formed from, for example, a soluble vanadium compound and an alkylaluminum halide compound.

Examples of the soluble vanadium compounds include vanadium tetrachloride, vanadium oxytrichloride, vanadium triacetylacetate and oxyvanadium triacetylacetate. Examples of the alkylaluminum halide compounds include ethylaluminum dichloride, diethylaluminum monochloride, ethylaluminum sesquichloride, diethylaluminum monobromide, diisobutylaluminum monochloride and isobutylaluminum sesquichloride.

The random copolymerization can be carried out in a solution state, a suspension state or an intermediate state therebetween. In any case, an inert solvent is preferably used as a reaction medium. Examples of the inert solvents include aliphatic hydrocarbons of about 3 to 12 carbon atoms, such as propane, butane, pentane, hexane, octane, nonane, decane, undecane and dodecane; kerosine; and halogenated hydrocarbons, such as methyl chloride, ethyl chloride and ethylene dichloride. These solvents can be used singly or in combination. The polymerization temperature may be in the range of 0 to 100 °C.

In the present invention, the following linear or long-chain branched ethylene/α-olefin random copolymer is preferably used as the ethylene random copolymer (B1).

Linear ethylene/α-olefin random copolymer

The linear ethylene/α-olefin random copolymer preferably used in the invention has a density of 0.850 to 0.900 g/cm$^3$, preferably 0.850 to 0.888 g/cm$^3$, more preferably 0.850 to 0.885 g/cm$^3$, and has a melt flow rate (ASTM D 1238, 190 °C, load of 2.16 kg) of 0.1 to 30 g/10 min, preferably 3 to 20 g/10 min.

The linear ethylene/α-olefin random copolymer has an intrinsic viscosity (η), as measured in decalin at 135 °C, of 0.3 to 3.0 dl/g, preferably 0.5 to 2.0 dl/g. The linear ethylene/α-olefin random copolymer having an intrinsic viscosity in this range has good blending properties with the propylene/1-butene random copolymer (B2) and with the polypropylene resin (A). Further, use of this linear ethylene/α-olefin random copolymer makes it possible to obtain a polypropylene resin composition having high flowability and excellent moldability.

The linear ethylene/α-olefin random copolymer preferably has a glass transition temperature (Tg), as measured by a differential scanning calorimeter (DSC), of not higher than -50 °C.

The linear ethylene/α-olefin random copolymer has a crystallinity, as measured by X-ray diffractometry, of less than 40 %, preferably not more than 30 %. When the linear ethylene/α-olefin random copolymer having a crystallinity of less than 40 % is used, a polypropylene resin composition having excellent flexibility can be obtained.

The linear ethylene/α-olefin random copolymer desirably has a molecular weight distribution (Mw/Mn), as determined by GPC, of not more than 3.0, and desirably has a parameter B value, which indicates randomness of a copolymerized monomer sequence distribution and is determined by a $^{13}$C-NMR method, of 1.0 to 1.4.

The B value of the linear ethylene/α-olefin random copolymer is an index of a composition distribution of constituent units derived from each monomer in the copolymerized monomer sequences, and can be calculated by the following equation:

$$B = P_{OE}/(2P_O \cdot P_E)$$

wherein $P_E$ is a molar fraction of an ethylene component contained in the ethylene/α-olefin random copolymer, $P_O$ is a molar fraction of an α-olefin component contained therein, and $P_{OE}$ is a proportion of the number of ethylene/α-olefin alternating sequences to the number of all the dyad sequences.

The values for $P_E$, $P_O$ and $P_{OE}$ can be determined in the following manner.

In a test tube having a diameter of 10 mm, about 200 mg of an ethylene/α-olefin random copolymer is homogeneously dissolved in 1 ml of hexachlorobutadiene to give a sample. A $^{13}$C-NMR spectrum of this sample is measured under the following measuring conditions.

Measuring conditions

Measuring temperature: 120 °C
Measuring frequency; 20.05 MHz
Spectrum width: 1,500 Hz
Filter width: 1,500 Hz
Pulse repetition time: 4.2 sec
Pulse width: 7 μsec
Number of integration times: 2,000 to 5,000

The $P_E$, $P_O$ and $P_{OE}$ values can be found from the $^{13}$C-NMR spectrum in accordance with the reports by G. J. Ray (Macromolecules, 10, 773 (1977)), J.C. Randall (Macromolecules, 15, 353 (1982)) and K. Kimura (Polymer, 25, 4418 (1984)).

When the both monomers are alternately distributed in the ethylene/α-olefin copolymer, the B value defined by the above equation is 2, and when the both monomers are completely separately distributed to form a complete block copolymer, the B value is 0.

When the linear ethylene/α-olefin random copolymer having a B value in the above range is used, a polypropylene resin composition capable of providing molded products of high heat resistance can be obtained.

The linear ethylene/α-olefin random copolymer preferably has a gη* value, as determined by the intrinsic

viscosity (η), of more than 0.95.

The gη* value is defined by the following equation:

$$g\eta^* = (\eta)/(\eta)_{blank}$$

wherein (η) is an intrinsic viscosity of the linear ethylene/α-olefin random copolymer measured above (property (b)), and $(\eta)_{blank}$ is an intrinsic viscosity of a linear ethylene/propylene copolymer having the same weight-average molecular weight (measured by a light scattering method) as this ethylene/α-olefin random copolymer and having an ethylene content of 70 % by mol.

By the use of the linear ethylene/α-olefin random copolymer having the above properties, a polypropylene resin composition capable of providing molded products having excellent mechanical strength and heat resistance can be obtained.

A process for preparing the linear ethylene/α-olefin random copolymer is described later.

Long-chain branched ethylene/α-olefin random copolymer

The long-chain branched ethylene/α-olefin random copolymer preferably used in the invention has a density of 0.850 to 0.900 g/cm$^3$, preferably 0.850 to 0.888 g/cm$^3$, more preferably 0.850 to 0.885 g/cm$^3$, and has a melt flow rate (ASTM D 1238, 190 °C, load of 2.16 kg) of 0.1 to 30 g/10 min, preferably 3 to 20 g/10 min.

The long-chain branched ethylene/α-olefin random copolymer has an intrinsic viscosity (η), as measured in decalin at 135 °C, of 0.3 to 3.0 dl/g, preferably 0.5 to 2.0 dl/g. The long-chain branched ethylene/α-olefin random copolymer having an intrinsic viscosity in this range has good blending properties with the propylene/1-butene random copolymer (B2) and with the polypropylene resin (A). Further, use of this long-chain branched ethylene/α-olefin random copolymer makes it possible to obtain a polypropylene resin composition having high flowability and excellent moldability.

The long-chain branched ethylene/α-olefin random copolymer preferably has a glass transition temperature (Tg), as measured by DSC, of not higher than -50 °C.

The long-chain branched ethylene/α-olefin random copolymer has a crystallinity, as measured by X-ray diffractometry, of less than 40 %, preferably not more than 30 %. When the long-chain branched ethylene/α-olefin random copolymer having a crystallinity of less than 40 % is used, a polypropylene resin composition having excellent flexibility can be obtained.

The long-chain branched ethylene/α-olefin random copolymer desirably has a molecular weight distribution (Mw/Mn), as determined by GPC, of not more than 3.0, and desirably has a parameter B value, which indicates randomness of a copolymerized monomer sequence distribution and is determined by a $^{13}$C-NMR method, of 1.0 to 1.4.

When the long-chain branched ethylene/α-olefin random copolymer having a B value in this range is used, a polypropylene resin composition capable of providing molded products of high heat resistance can be obtained.

The long-chain branched ethylene/α-olefin random copolymer preferably has a gη* value of 0.2 to 0.95, more preferably 0.4 to 0.9, particularly preferably 0.5 to 0.85. By the fact that the ethylene/α-olefin random copolymer has a gη* value of not more than 0.95 is revealed that a long-chain branch is formed in the molecule.

Preparation of linear or long-chain branched ethylene/α-olefin random copolymer

The linear or the long-chain branched ethylene/α-olefin random copolymer having the above properties can be prepared by random copolymerizing ethylene and an α-olefin of 3 to 20 carbon atoms in the presence of a metallocene catalyst containing a specific metallocene compound.

There is no specific limitation on the metallocene catalyst as far as it contains a metallocene compound (a). For example, the metallocene catalyst may be formed from a metallocene compound (a) and an organoaluminum oxy-compound (b) and/or a compound (ionized ionic compound) (c) which reacts with the metallocene compound (a) to form an ion pair; or the metallocene catalyst may be formed from a metallocene compound (a), an organoaluminum oxy-compound (b) and/or a compound (c) which forms an ion pair, and an organoaluminum compound (d).

Metallocene compound (a)

A metallocene compound (a1) for use in the preparation of the linear ethylene/α-olefin random copolymer that is preferably used in the invention is described in detail in Japanese Patent Application No. 236771/1995 and PCT/JP96/02609.

In the present invention, a compound represented by the following formula (I) or (II) (corresponding to the

formula (III) or (IV) in Japanese Patent Application No. 236771/1995) is preferably used as the metallocene compound (a1) :

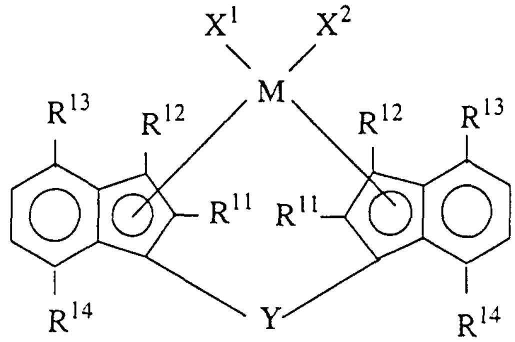

(I)

In the above formula, M is a transition metal atom of Group IVB of the periodic table, specifically titanium, zirconium or hafnium, particularly preferably zirconium.

$R^{11}$ and $R^{12}$ are each a hydrogen atom, a halogen atom, a hydrocarbon group of 1 to 20 carbon atoms which may be substituted with halogen, a silicon-containing group, an oxygen-containing group, a sulfur-containing group, a nitrogen-containing group or a phosphorus-containing group.

$R^{11}$ is particularly preferably a hydrocarbon group of 1 to 3 carbon atoms, such as methyl, ethyl or propyl. $R^{12}$ is particularly preferably a hydrogen atom or a hydrocarbon group of 1 to 3 carbon atoms, such as methyl, ethyl or propyl.

$R^{13}$ and $R^{14}$ are each an alkyl group of 1 to 20 carbon atoms. $R^{13}$ is preferably a secondary or tertiary alkyl group. $R^{14}$ may contain a double bond or a triple bond.

$X^1$ and $X^2$ are each a hydrogen atom, a halogen atom, a hydrocarbon group of 1 to 20 carbon atoms, a halogenated hydrocarbon group of 1 to 20 carbon atoms, an oxygen-containing group or a sulfur-containing group. Of these, preferable is a halogen atom or a hydrocarbon group of 1 to 20 carbon atoms.

Y is a divalent hydrocarbon group of 1 to 20 carbon atoms, a divalent halogenated hydrocarbon group of 1 to 20 carbon atoms, a divalent silicon-containing group, a divalent germanium-containing group, -O-, -CO-, -S-, -SO-, $-SO_2-$, $-NR^7-$, $-P(R^7)-$, $-P(O)(R^7)-$, $-BR^7-$ or $-AlR^7-$ ($R^7$ is a hydrogen atom, a halogen atom, a hydrocarbon group of 1 to 20 carbon atoms or a halogenated hydrocarbon group of 1 to 20 carbon atoms). Y is particularly preferably an alkylsilylene group, an alkylarylsilylene group or an arylsilylene group.

The transition metal compound mentioned above can be prepared from an indene derivative in accordance with a known process, for example, a process described in Japanese Patent Laid-Open Publication No. 268307/1992.

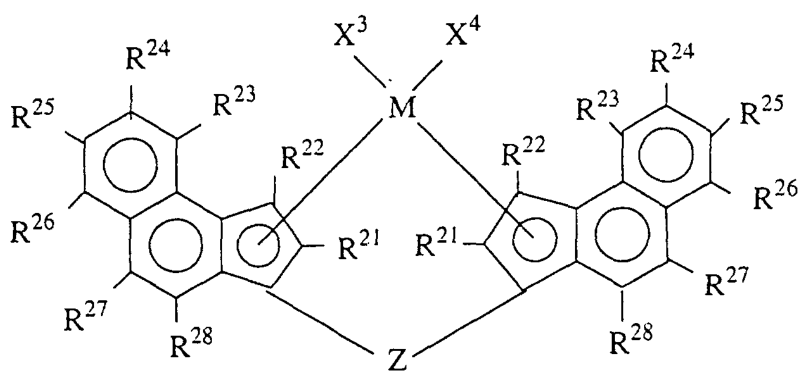

(II)

In the above formula, M is a transition metal atom of Group IVB of the periodic table, specifically titanium, zirconium or hafnium, particularly preferably zirconium.

The groups $R^{21}$ may be the same or different, and are each a hydrogen atom, a halogen atom, an alkyl group of 1 to 10 carbon atoms which may be halogenated, an aryl group of 6 to 10 carbon atoms, $-NR_2$, -SR, $-OSiR_3$, $-SiR_3$ or $-PR_2$ (R is a halogen atom, an alkyl group of 1 to 10 carbon atoms or an aryl group of 6 to 10 carbon atoms).

$R^{22}$ to $R^{28}$ may be the same or different, and are each the same as defined for $R^{21}$, and at least two adjacent

groups of $R^{22}$ to $R^{28}$ may form an aromatic ring or an aliphatic ring together with the atoms to which they are bonded.

$X^3$ and $X^4$ may be the same or different, and are each a hydrogen atom, a halogen atom, OH group, an alkyl group of 1 to 10 carbon atoms, an alkoxy group of 1 to 10 carbon atoms, an aryl group of 6 to 10 carbon atoms, an aryloxy group of 6 to 10 carbon atoms, an alkenyl group of 2 to 10 carbon atoms, an arylalkyl group of 7 to 40 carbon atoms, an alkylaryl group of 7 to 40 carbon atoms or an arylalkenyl group of 8 to 40 carbon atoms.

Z is

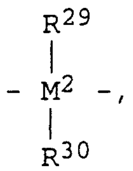
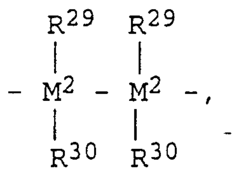
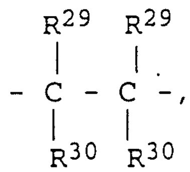
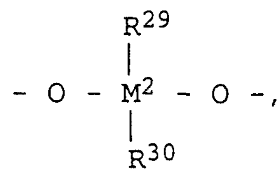
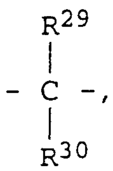
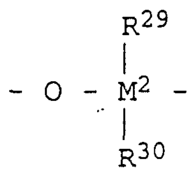

$=BR^{29}$, $=AlR^{29}$, -Ge-, -Sn-, -O-, -S-, =SO, $=SO_2$, $=NR^{29}$, =CO, $=PR^{29}$ or $=P(O)R^{29}$.

In the above formulas, $R^{29}$ and $R^{30}$ may be the same or different, and are each a hydrogen atom, a halogen atom, an alkyl group of 1 to 10 carbon atoms, a fluoroalkyl group of 1 to 10 carbon atoms, an aryl group of 6 to 10 carbon atoms, a fluoroaryl group of 6 to 10 carbon atoms, an alkoxy group of 1 to 10 carbon atoms, an alkenyl group of 2 to 10 carbon atoms, an alkylaryl group of 7 to 40 carbon atoms, an arylalkenyl group of 8 to 40 carbon atoms or an arylalkyl group of 7 to 40 carbon atoms.

$R^{29}$ and $R^{30}$ may form a ring together with the atoms to which they are bonded.

$M^2$ is silicon, germanium or tin.

The alkyl groups mentioned above may be straight-chain or branched. The halogen atom (halogenation) mentioned above is fluorine, chlorine, bromine or iodine, particularly preferably fluorine or iodine.

The compound represented by the formula (II) is described in EP-549900 and Canadian Patent No. 2,084,017.

A metallocene compound (a2) for use in the preparation of the long-chain branched ethylene/α-olefin random copolymer that is preferably used in the invention is described in detail in Japanese Patent Application No. 236770/1995 and PCT/JP96/02575.

In the present invention, a compound represented by the following formula (III) (corresponding to the formula (I) in Japanese Patent Application No. 236770/1995) is preferably used as the metallocene compound (a2):

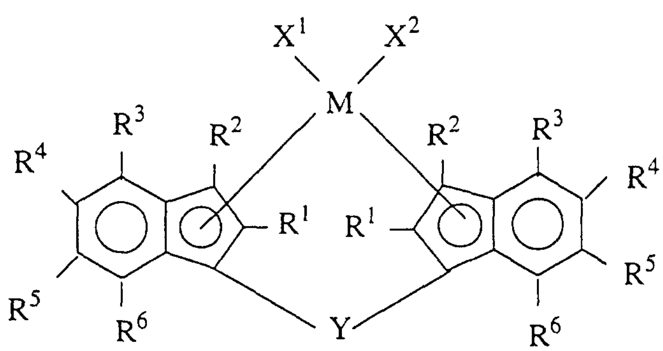

(III)

In the above formula, M is a transition metal atom of Group IVB of the periodic table, specifically titanium, . zirconium or hafnium, particularly preferably zirconium.

$R^1$ is a hydrocarbon group of 1 to 6 carbon atoms, and is preferably an alkyl group whose carbon bonding to the indenyl group is primary carbon. Particularly preferable $R^1$ is methyl or ethyl.

$R^2$, $R^4$, $R^5$ and $R^6$ may be the same or different, and are each a hydrogen atom, a halogen atom or the same hydrocarbon group of 1 to 6 carbon atoms as defined for $R^1$.

$R^3$ is an aryl group of 6 to 16 carbon atoms which may be substituted with a halogen atom, a hydrocarbon group of 1 to 20 carbon atoms or an organosilyl group.

$X^1$ and $X^2$ are each a hydrogen atom, a halogen atom, a hydrocarbon group of 1 to 20 carbon atoms which may be substituted with halogen, an oxygen-containing group or a sulfur-containing group.

Y is a divalent hydrocarbon group of 1 to 20 carbon atoms, a divalent halogenated hydrocarbon group of 1 to 20 carbon atoms, a divalent silicon-containing group, a divalent germanium-containing group, -O-, -CO-, -S-, -SO-, $-SO_2-$, $-NR^7-$, $-P(R^7)-$, $-P(O)(R^7)-$, $-BR^7-$ or $-AlR^7-$ ($R^7$ is a hydrogen atom, a halogen atom, a hydrocarbon group of 1 to 20 carbon atoms or a halogenated hydrocarbon group of 1 to 20 carbon atoms).

Y is preferably a divalent silicon-containing group or a divalent germanium-containing group, more preferably a divalent silicon-containing group, particularly preferably an alkylsilylene group, an alkylarylsilylene group or an arylsilylene group.

In the present invention, the metallocene compounds mentioned above can be used singly or in combination of two or more kinds.

The metallocene compounds can be prepared in accordance with processes described in Journal of Organometallic Chem. 288 (1985), pp 63-67, and European Patent Published Application No. 0,320,762.

Organoaluminum oxy-compound (b)

As the organoaluminum oxy-compound (b), an aluminoxane is preferably employed. Specifically, there can be used, for example, methylaluminoxane, ethylaluminoxane or methylethylaluminoxane, each of which has usually about 3 to 50 recurring units represented by the formula -Al(R)O-(R is an alkyl group).

The aluminoxane can be prepared in accordance with a conventional process.

Compound (c) which reacts with the metallocene compound (a) to form an ion pair

The compound (ionized ionic compound) (c) which reacts with the metallocene compound (a) to form an ion pair is, for example, a Lewis acid such as triphenylboron, $MgCl_2$, $Al_2O_3$, $SiO_2$-$Al_2O_3$ as described in U.S. Patent No. 5,321,106.

The ionized ionic compound (c) can be used singly or in combination of two or more kinds.

Organoaluminum compound (d)

The organoaluminum compound (d), which may optionally be used in the invention, includes, for example, trialkylaluminum, dialkylaluminum halide, alkylaluminum sesquihalide and alkylaluminum dihalide.

These organoaluminum compounds can be used singly or in combination of two or more kinds.

The specific metallocene catalyst for use in the invention comprises the above-described metallocene compound (a), and can be prepared from, for example, the metallocene compound (a) and the organoaluminum oxy-compound (b) as described above. The catalyst may also be formed from the metallocene compound (a) ((a1) or (a2)) and the compound (c) which reacts with the metallocene compound (a) to form an ion pair, or from the metallocene compound (a), the organoaluminum oxy-compound (b) and the compound (c) which reacts with the metallocene compound (a) to form an ion pair. In any case, it is preferable to further use the organoaluminum compound (d) in combination.

In the copolymerization of ethylene and an $\alpha$-olefin of 3 to 20 carbon atoms, the components for forming the metallocene catalyst, namely, the metallocene compound (a) ((a1) or (a2)), the organoaluminum oxy-compound (b), the ion pair-forming compound (c), and optionally, the organoaluminum compound, may be fed separately to a polymerization reactor; or a metallocene catalyst containing the metallocene compound, which is previously prepared, may be supplied for the copolymerization reaction.

In the preparation of the metallocene catalyst, a hydrocarbon solvent which is inert to the catalyst components can be employed.

The copolymerization of ethylene and an $\alpha$-olefin of 3 to 20 carbon atoms can be carried out under the conditions of a temperature of usually 40 to 200 °C, preferably 50 to 150 °C, particularly preferably 60 to 120 °C, and a pressure of atmospheric pressure to 100 $kg/cm^2$, preferably atmospheric pressure to 50 $kg/cm^2$, particularly preferably atmospheric pressure to 30 $kg/cm^2$.

The copolymerization reaction can be carried out by various polymerization processes, but a solution polymerization process is preferably adopted. In the solution polymerization, the hydrocarbon solvent mentioned above can be used as the polymerization solvent.

Though the copolymerization can be carried out batchwise, semicontinuously or continuously, it is preferably carried out continuously. The copolymerization can be performed in two or more stages under different reaction conditions.

The linear or long-chain branched ethylene/$\alpha$-olefin random copolymer for use in the invention can be obtained by the process described above, and the molecular weight of the copolymer can be modified by changing the polymerization conditions such as polymerization temperature or by controlling the amount of hydrogen (molecular weight modifier) used.

In the present invention, the ethylene random copolymer (B1) may be an ethylene random copolymer partially or completely modified with an unsaturated carboxylic acid or anhydride thereof. The modified ethylene random copolymer contributes to improving overwrapping properties and adhesion to substrates such as metals.

Propylene/1-butene random copolymer (B2)

The propylene/1-butene random copolymer (B2) for use in the invention contains constituent units derived from propylene in amounts of 50 to 95 % by mol, preferably 55 to 93 % by mol, more preferably 60 to 90 % by mol, and constituent units derived from 1-butene in amounts of 5 to 50 % by mol, preferably 7 to 45 % by mol, more preferably 10 to 40 % by mol.

The propylene/1-butene random copolymer (B2) may contain constituent units derived from olefins other than propylene and 1-butene in small amounts, e.g., not more than 10 % by mol, desirably not more than 5 % by mol.

The propylene/1-butene random copolymer (B2) has a melt flow rate (MFR, ASTM D 1238, 230 °C, load of 2.16 kg) of 0.1 to 50 g/10 min, preferably 0.5 to 30 g/10 min, more preferably 1 to 20 g/10 min.

The propylene/1-butene random copolymer (B2) has a molecular weight distribution (Mw/Mn), as determined by gel permeation chromatography (GPC), of not more than 3.0, preferably not more than 2.5.

The propylene/1-butene random copolymer (B2) has a parameter B value, which indicates randomness of a copolymerized monomer sequence distribution, of 1.0 to 1.5, preferably 1.0 to 1.3, more preferably 1.0 to 1.2.

The parameter B value was proposed by Cole-man, et al. (B.D. Cole-man and T.G. Fox, J. Polym. Sci., A1, 3183 (1963)), and is defined as follows.

$$B = P_{12}/(2P_1 \cdot P_2)$$

wherein $P_1$ is a first monomer fraction, $P_2$ is a second monomer fraction, and $P_{12}$ is a proportion of the first monomer-second monomer sequences to all the dyad sequences.

The B value conforms to the Bernoulli's statistics, and in case of $B < 1$, the copolymer is block-like, while in case of $B > 1$, the copolymer is alternating.

In addition to the above properties, the propylene/1-butene random copolymer (B2) desirably has a melting point Tm, as measured by a differential scanning calorimeter, of 60 to 140 °C, preferably 80 to 130 °C, and the melting point Tm and the 1-butene constituent unit content M (% by mol) satisfy the relation

$$-2.6M + 130 \le Tm \le -2.3M + 155.$$

When the melting point of the propylene/1-butene random copolymer (B2) exceeds 140 °C, films of the polypropylene resin composition may require a high heat-sealing temperature of at least 130 °C. When the melting point thereof is lower than 60 °C, scratch resistance of films of the composition may be reduced and blocking of films may take place in the storage, resulting in difficulty in practical use, though the low-temperature heat-sealing properties are improved.

The propylene/1-butene random copolymer (B2) desirably has a crystallinity C (%), as measured by X-ray diffractometry, and a 1-butene constituent unit content M (% by mol) satisfying the relation

$$C \ge -1.5M + 75.$$

The crystallinity of the propylene/1-butene random copolymer (B2) is desirably in the range of 15 to 65 %, preferably 20 to 60 %.

When the propylene/1-butene random copolymer (B2) having a crystallinity in the above range is used, a polypropylene resin composition capable of providing films of excellent scratch resistance, low-temperature heat-sealing properties and blocking resistance can be obtained.

Further, the propylene/1-butene random copolymer (B2) may contain regio-irregular units based on 2,1-insertion of propylene monomer in a ratio of not less than 0.05 % of all the propylene constituent units, as determined by a $^{13}$C-NMR spectrum of the copolymer.

In the polymerization, the propylene monomer often undergoes 1,2-insertion (the methylene side is bonded to the catalyst), but sometimes undergoes 2,1-insertion. The 2,1-inserted monomer forms regio-irregular units in the resulting polymer.

The ratio of the regio-irregular units based on the 2,1-insertion to all of the propylene constituent units can be calculated from the following equation using $^{13}$C-NMR and making reference to Polymer, 30, 1350 (1989).

$$\text{Ratio of regio-irregular units units based on 1,2-insersion} = \frac{0.5\ I\alpha\beta\ (\text{structures (iii), (v)}) + 0.25\ I\alpha\beta\ (\text{structure (iv)})}{I\alpha\alpha + I\alpha\beta\ (\text{structures (iii), (v)}) + 0.5\ (I\alpha\gamma + I\alpha\beta\ (\text{structure (iv)}) + I\alpha\delta)} \times 100$$

Naming of the peaks follows a method of Carman, et al. (Rubber Chem. Technol., 44, 781 (1971)). Symbols $I\alpha\beta$ and the like mean peak areas of the $\alpha\beta$ peak and the like.

If it is difficult to find the area of $I\alpha\beta$ or the like directly from the spectrum because of overlapping of peaks, the carbon peak having a corresponding area can be substituted therefor.

In the propylene/1-butene random copolymer (B2) for use in the invention, the ratio of the regio-irregular units based on 1,3-insertion of propylene monomer may be not more than 0.05 %.

The quantity of the triad sequences based on the 1,3-insertion can be determined by the $\beta\gamma$ peak (resonance at about 27.4 ppm).

The propylene/1-butene random copolymer (B2) mentioned above can be obtained by copolymerizing propylene and 1-butene in the presence of an olefin polymerization catalyst comprising:

(e) a specific transition metal compound,
(f) an organoaluminum oxy-compound (f-1) and/or a compound (f-2) which reacts with the transition metal compound (e) to form an ion pair,
and optionally
(g) an organoaluminum compound.

The transition metal compound (e) (sometimes referred to as "component (e)" hereinafter) is represented by the following formula (IV):

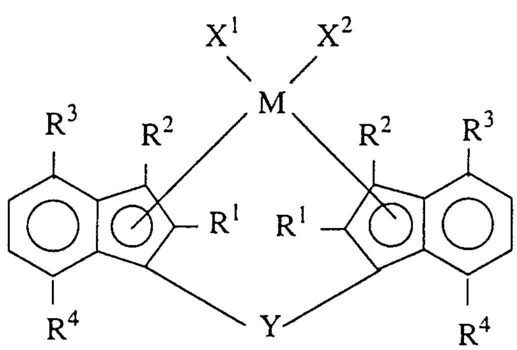

(IV)

In the above formula, M is a transition metal of Group IVB, Group VB or Group VIB of the periodic table, preferably titanium, zirconium or hafnium, particularly preferably zirconium.

$R^1$ and $R^2$ are each independently a hydrogen atom, a halogen atom, a hydrocarbon group of 1 to 20 carbon atoms, a halogenated hydrocarbon group of 1 to 20 carbon atoms, a silicon-containing group, an oxygen-containing group, a sulfur-containing group, a nitrogen-containing group or a phosphorus-containing group.

$R^3$ is a hydrocarbon group of 1 to 20 carbon atoms which may be substituted with either a halogen atom or

a silicon-containing group, and is preferably a secondary or tertiary alkyl group of 3 to 20 carbon atoms or an aromatic group,

$R^4$ is a hydrogen atom or an alkyl group of 1 to 20 carbon atoms which may be substituted with a halogen atom or a silicon-containing group.

$X^1$ and $X^2$ are each a hydrogen atom, a halogen atom, a hydrocarbon group of 1 to 20 carbon atoms, a halogenated hydrocarbon group of 1 to 20 carbon atoms, an oxygen-containing group or a sulfur-containing group.

Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$ or the like.

Y is particularly preferably alkylsilylene, alkylarylsilylene or arylsilylene.

The transition meal compound (e) represented by the formula (IV) is preferably a compound of said formula wherein $R^1$ is methyl.

The transition metal compound used in the invention can be prepared in accordance with processes described in Journal of Organometallic Chem. 288 (1985), pp 63-67, and European Patent Published Application No. 0,320,762.

The organoaluminum oxy-compound (f-1) (sometimes referred to as "component (f-1)" hereinafter) for forming the olefin polymerization catalyst used in the invention may be identical with the organoaluminum oxy-compound (b), may be aluminoxane generally known or a benzene-insoluble organoaluminum oxy-compound described in Japanese Patent Laid-Open Publication No. 78687/1990.

The compound (f-2) (sometimes referred to as "component (f-2)" hereinafter) which reacts with the transition metal compound (e) to form an ion pair is identical with the ionized ionic compound (c).

The organoaluminum compound (g) (sometimes referred to as "component (g)" hereinafter) is, for example, an organoaluminum compound represented by the following formula (V):

$$R^9{}_nAlX_{3-n} \qquad (V)$$

wherein $R^9$ is a hydrocarbon group of 1 to 12 carbon atoms,
X is a halogen atom or a hydrogen atom, and
n is 1 to 3.

In the formula (V), $R^9$ is a hydrocarbon group of 1 to 12 carbon atoms, such as an alkyl group, a cycloalkyl group or an aryl group.

Examples of the organoaluminum compound (g) include trialkylaluminum, alkenylaluminum, dialkylaluminum halide, alkylaluminum sesquihalide, alkylaluminum dihalide and alkylaluminum hydride.

Also employable as the organoaluminum compound (g) is a compound represented by the following formula (VI):

$$R^9{}_nAlL_{3-n} \qquad (VI)$$

wherein $R^9$ is the same as defined in the formula (V),
L is $-OR^{10}$, $-OSiR^{11}{}_3$ , $-OAlR^{12}{}_2$ , $-NR^{13}{}_2$ , $-SiR^{14}{}_3$ or $-N(R^{15})AlR^{16}{}_2$ group,
n is 1 to 2,
$R^{10}$, $R^{11}$, $R^{12}$ and $R^{16}$ are each methyl, ethyl, isopropyl, isobutyl, cyclohexyl, phenyl or the like,
$R^{13}$ is a hydrogen atom, methyl, ethyl, isopropyl, phenyl, trimethylsilyl or the like, and
$R^{14}$ and $R^{15}$ are each methyl, ethyl or the like.

Of such organoaluminum compounds, preferable are compounds represented by the formula $R^7{}_nAl(OAlR^{10}{}_2)_{3-n}$, for example, $Et_2AlOAlEt_2$ and $(iso\text{-}Bu)_2AlOAl(iso\text{-}Bu)_2$.

Of the organoaluminum compounds represented by the formulas (V) and (VI), preferable are compounds of the formula $R^7{}_3Al$, and particularly preferable is a compound of said formula wherein $R^7$ is an isoalkyl group.

The olefin polymerization catalyst used in the invention is formed from the component (e), the component (f-1) and/or the component (f-2) (referred to as "component (f)" hereinafter), and optionally, the component (g). The olefin polymerization catalyst can be prepared by mixing the component (e), the component (f), and optionally, the component (g) in an inert hydrocarbon solvent or an olefin solvent.

An olefin may be prepolymerized onto the components for forming the olefin polymerization catalyst, and the resulting prepolymerized catalyst may be used in the invention.

Examples of the olefins preferably used for the prepolymerization include propylene, ethylene and 1-butene. Mixtures of these olefins and other olefins may also employable.

The propylene/1-butene random copolymer (B2) for use in the invention can be prepared by copolymerizing propylene and 1-butene in the presence of the olefin polymerization catalyst described above.

The polymerization can be carried out as any of liquid phase polymerization, e.g., solution polymerization, and solid phase polymerization.

The molecular weight of the resulting propylene/1-butene random copolymer (B2) can be modified by allowing hydrogen to be present in the polymerization system or changing the polymerization temperature or the polymerization pressure.

The process for preparing the propylene/1-butene random copolymer (B2) is described in detail in Japanese Patent Laid-Open Publication No. 43284/1995.

In the present invention, the propylene/1-butene random copolymer (B2) may be a propylene/1-butene random copolymer partially or completely modified with an unsaturated carboxylic acid or anhydride thereof. The modified propylene/1-butene random copolymer contributes to improving overwrapping properties of films of the composition and adhesion thereof to substrates such as metals.

Other components

To the polypropylene resin composition of the invention, resin components other than the polypropylene resin (A), the ethylene random copolymer (B1) and the propylene/1-butene random copolymer (B2), e.g., a polyethylene resin, can be added within limits not prejudicial to the objects of the present invention. Further, various additives, such as antioxidants, ultraviolet light absorbers, lubricants, nucleating agents, antistatic agents, flame retardants, pigments, dyes and inorganic or organic fillers, can be added.

Preparation of polypropylene resin composition

The polypropylene resin composition of the invention can be prepared by any of known methods. For example, the composition can be prepared by mixing the above components with a mixing machine such as a V-type blender, a ribbon blender or a Henschel mixer, or kneading them in a kneading machine such as an extruder, mixing rolls, a Banbury mixer or a kneader. The polypropylene resin composition may be prepared by mixing and kneading the components using the above-mentioned mixing machine and kneading machine in combination.

Because the polypropylene resin composition obtained as above contains the propylene/1-butene random copolymer (B2) as the rubber component (B), the dispersibility of the ethylene random copolymer (B1) in the polypropylene resin (A) is good, and diameters of the dispersed particles of the ethylene random copolymer (B1) can be reduced. As a result, molded products, e.g., films, having improved heat-sealing properties and excellent low-temperature impact resistance and transparency can be obtained.

The propylene/1-butene random copolymer (B2) prepared using the aforesaid catalyst has a molecular weight distribution and a composition distribution narrower than those of a propylene/1-butene random copolymer prepared using other conventionally known titanium catalysts. Therefore, when the propylene/1-butene random copolymer (B2) is used, obtainable is a polypropylene resin composition capable of producing films of higher blocking resistance, as compared with the case of using a propylene/1-butene random copolymer prepared by the use of the titanium catalysts.

EFFECT OF THE INVENTION

The polypropylene resin composition of the invention can provide molded products, e.g., films and sheets, having not only excellent heat-sealing properties but also excellent low-temperature impact resistance, transparency, blocking resistance, blushing resistance and scratch resistance.

The polypropylene resin composition of the invention is suitable for films and sheets desired to have heat-sealing properties, low-temperature impact resistance, transparency, blocking resistance, blushing resistance and scratching resistance, such as packaging films, and besides it can be molded into other products.

EXAMPLE

The present invention is further described with reference to the following examples, but it should be construed that the invention is in no way limited to those examples.

Films produced from polypropylene resin compositions obtained in the following examples were evaluated on the low-temperature impact resistance, transparency, gloss, slip properties, blocking resistance and heat-sealing properties by the following test methods.

(1) Low-temperature impact resistance (impact strength)

The impact strength was measured in accordance with JIS-P8134 (measuring temperature: 0 °C). The impact tester used has a capacity of 30 kg/cm·cm, and a hammer head of the tester has a diameter of 1/2 inch.

(2) Transparency (haze)

The haze was measured in accordance with ASTM D 1003.

(3) Gloss

The gloss was measured in accordance with ASTM D 523

(4) Slip properties (static friction coefficient, dynamic fiction coefficient)

After the film was annealed at 40 °C for one day, the static friction coefficient and the dynamic friction coefficient were measured in accordance with ASTM D 1894.

(5) Blocking resistance (blocking force)

After the film was annealed at 50 °C for one day, the blocking force was measured in accordance with ASTM D 1893.

(6) Heat-sealing properties (heat-sealing strength)

The films were superposed one upon another, then heat-sealed under the conditions of a temperature of 130 °C, 140 °C, 150 °C or 160 °C, a pressure of 2 $kg/cm^2$, a period of 1 second and a sealing bar with of 5 mm, and allowed to stand for cooling. Then, the films thus heat-sealed at each temperature were cut to give a specimen having a width of 15 mm. The specimen was subjected to a peel test at a crosshead speed of 200 mm/min to measure a peel strength of the heat-sealed portion.

(7) Blushing resistance

The injection molded square plate was subjected to the drop-weight test and then the blushing resistance was visually evaluated.

(8) Scratching resistance

The film was laminated on a steel sheet and the scratching resistance was evaluated by means of pencil hardness.

<u>Preparation Example 1</u>

<u>Preparation of propylene/1-butene random copolymer (PBR-1)</u>

To a 2-liter autoclave thoroughly purged with nitrogen, 900 ml of hexane and 60 g of 1-butene were introduced. To the autoclave, 1 mmol of triisobutylaluminum was added. After the temperature of the system was elevated to 70 °C, propylene was fed so that the total pressure became 7 $kg/cm^2$-G. To the system, 0.30 mmol of methylaluminoxane and 0.001 mmol (in terms of Zr atom) of rac-dimethylsilylene-bis{1-(2-methyl-4-phenylindenyl)}zirconium dichloride were added, and then propylene was continuously fed to perform polymerization for 30 minutes with keeping the total pressure at 7 $kg/cm^2$-G. After the polymerization, gaseous matter was removed from the system, and the resulting polymer was recovered in a large amount of methanol, followed by drying at 110 °C for 12 hours under reduced pressure.

The yield of the polymer (propylene/1-butene random copolymer (PBR-1)) was 39.7 g. The polymerization activity was 79 kg-polymer/mmol-Zr·hr.

The polymer contained 24 % by mol of constituent units derived from 1-butene, and had a melt flow rate (ASTM D 1238, 230 °C, load of 2.16 kg) of 6.8 g/10 min, a molecular weight distribution (Mw/Mn, measured by GPC) of 2.05, a B value of 1.00, a melting point (Tm) of 91 °C and a crystallinity (measured by X-ray diffractometry) of 40 %.

Preparation Example 2

Preparation of propylene/1-butene random copolymer (PBR-2)

To a 2-liter autoclave thoroughly purged with nitrogen, 830 ml of hexane and 100 g of 1-butene were introduced. To the autoclave, 1 mmol of triisobutylaluminum was added. After the temperature of the system was elevated to 70 °C, propylene was fed so that the total pressure became 7 kg/cm$^2$-G. To the system, 1 mmol of triethylaluminum and 0.005 mmol (in terms of Ti atom) of a magnesium chloride-supported titanium catalyst were added, and then propylene was continuously fed to perform polymerization for 30 minutes with keeping the total pressure at 7 kg/cm$^2$-G. After the polymerization, gaseous matter was removed from the system, and the resulting polymer was recovered in a large amount of methanol, followed by drying at 110 °C for 12 hours under reduced pressure.
The yield of the polymer (propylene/1-butene random copolymer (PBR-2)) was 33.7 g. The polymerization activity was 14 kg-polymer/mmol-Ti·hr.
The polymer contained 23 % by mol of constituent units derived from 1-butene, and had a melt flow rate (ASTM D 1238, 230 °C, load of 2.16 kg) of 6.4 g/10 min, a molecular weight distribution (Mw/Mn, measured by GPC) of 4.52, a B value of 0.92, a melting point (Tm) of 110 °C and a crystallinity (measured by X-ray diffractometry) of 48 %.

Example 1

In a Henschel mixer, 11 parts by weight of an ethylene/propylene random copolymer (EPR) having an ethylene content of 81 % by mol, MFR (ASTM D 1238, 190 °C, load of 2.16 kg) of 1.0 g/10 min, a density of 0.870 g/cm$^3$ and a crystallinity (measured by X-ray diffractometry) of 6 % was mixed with 4 parts by weight of the propylene/1-butene random copolymer (PBR-1) obtained in Preparation Example 1. The mixture was extruded by an extruder equipped with a pelletizer to obtain pellets of a rubber component.
Then, 15 parts by weight of the pellets of the rubber component and 85 parts by weight of a polypropylene resin (random PP) having an ethylene content of 2.3 % by mol, MFR (ASTM D 1238, 230 °C, load of 2.16 kg) of 6.5 g/10 min, a melting point of 141 °C and an isotactic index (I.I.) of 96 % were mixed in a Henschel mixer. The mixture was melted by an extruder and fed to a film forming die at a resin temperature of 200 °C, to obtain a film having a thickness of 50 µm.
The film was evaluated on the low-temperature impact resistance, transparency, gloss, slip properties, blocking resistance and heat-sealing properties by the aforesaid test methods.
The results are set forth in Table 1.

Example 2

A film having a thickness of 50 µm was obtained in the same manner as in Example 1, except that an ethylene/1-octene random copolymer (EOP) having an ethylene content of 84 % by mol, MFR (ASTM D 1238, 190 °C, load of 2.16 kg) of 1.8 g/10 min, a density of 0.869 g/cm$^3$ and a crystallinity (measured by X-ray diffractometry) of 6 % was used in place of the ethylene/propylene random polymer (EPR).
The film was evaluated on the low-temperature impact resistance, transparency, gloss, slip properties, blocking resistance and heat-sealing properties by the aforesaid test methods.
The results are set forth in Table 1.

Comparative Example 1

A film having a thickness of 50 µm was obtained in the same manner as in Example 1, except that the propylene/1-butene random copolymer (PBR-1) was not used.
The film was evaluated on the low-temperature impact resistance, transparency, gloss, slip properties, blocking resistance and heat-sealing properties by the aforesaid test methods.
The results are set forth in Table 1.

Comparative Example 2

A film having a thickness of 50 µm was obtained in the same manner as in Example 1, except that the propylene/1-butene random copolymer (PBR-2) obtained in Preparation Example 2 was used in place of the propylene/1-butene random copolymer (PBR-1).
The film was evaluated on the low-temperature impact resistance, transparency, gloss, slip properties, blocking resistance and heat-sealing properties by the aforesaid test methods.

The results are set forth in Table 1.

Table 1

| | Example 1 | Example 2 | Comparative Example 1 | Comparative Example 2 |
|---|---|---|---|---|
| Composition | | | | |
| (parts by weight) | | | | |
| Random PP *1 | 85 | 85 | 85 | 85 |
| EPR *2 | 11 | - | 15 | 11 |
| EOR *3 | - | 11 | - | - |
| PBR-1 *4 (Prep. Ex. 1) | 4 | 4 | - | - |
| PBR-2 *5 (Prep. Ex. 2) | - | - | - | 4 |
| Film properties | | | | |
| Film thickness (μm) | 50 | 50 | 50 | 50 |
| Impact strength (at 0°C) (kJ/m) | 23 | 26 | 20 | 21 |
| Haze (%) | 3.1 | 3.2 | 4.5 | 3.6 |
| Gloss (%) | 82 | 83 | 70 | 77 |
| Slip properties | | | | |
| Static friction coefficient | 0.24 | 0.24 | 0.26 | 0.25 |
| Dynamic friction coefficient | 0.23 | 0.24 | 0.25 | 0.24 |
| Blocking force (mN/cm) | 5.0 | 4.5 | 8.5 | 8.3 |
| Heat-sealing properties (N/15mm) | | | | |
| 130°C | 2.5 | 2.7 | 2.5 | 2.0 |
| 140°C | 11.7 | 12.0 | 11.7 | 11.0 |
| 150°C | 16.6 | 16.5 | 14.7 | 15.5 |
| 160°C | 15.4 | 15.8 | 13.9 | 13.9 |

* 1: Polypropylene resin (Ethylene content: 2.3 mol%, MFR (230°C): 6.5 g/10 min Tm: 141°C)
* 2: Ethylene/propylene random copolymer Propylene content: 19 mol%, MFR (190°C): 1.0 g/10 min)
* 3: Ethylene/1-octene random copolymer (1-octene content: 16 mol%, MFR (190°C): 1.8 g/10 min)
* 4: Propylene/1-butene random copolymer (1-butene content: 24 mol%, MFR (230°C): 6.8 g/10 min, Tm: 91°C)
* 5: Propylene/1-butene random copolymer (1-butene content: 23 mol %, MFR (230°C): 6.4 g/10 min, Tm: 110 °C)

## Claims

**1.** A polypropylene resin composition comprising

(a) 50-99 wt.-% of a polypropylene resin (A) and

(b) 50-1 wt.-% of a rubber component (B) comprising

b1) an ethylene random copolymer (B1) of ethylene and a $C_{3-20}$ α-olefin, and having the following properties:

(1-1) a density of 0.850-0.900 g/cm$^3$,

(2-1) a melt flow rate (ASTM D 1238, 190°C, 2.16kg load) of 0.1-30 g/10 min, and

(3-1) a degree of crystallinity, measured by X-ray diffractometry, of less than 40%; and

(b2) a propylene/1-butene random copolymer (B2) containing 50-95 mol-% of constituent units derived from propylene and 5-50 mol-% of constituent units derived from 1-butene, and having the following properties:

(1-2) a melt flow rate (ASTM D 1238, 230°C, 2.16 kg load) of 0.1-50g/10 min,

(2-2) a molecular weight distribution (Mw/Mn), determined by GPC, of not more than 3.0, and

(3-2) a B-value, indicating the randomness of the copolymerized monomer sequence distribution, of 1.0-1.5, wherein $B = P_{12}/(2P_1 \times P_2)$, where $P_1$ is the molar fraction of the first monomer, $P_2$ is the molar fraction of the second monomer and $P_{12}$ is the proportion of the first monomer-second monomer sequences to all the dyad sequences; and

the weight ratio (B1)/(B2) of the ethylene random copolymer (B1) to the propylene/1-butene random copolymer (B2) in the rubber component (B) is in the range of 95/5 to 20/80.

**2.** Composition according to claim 1, wherein (B1) is a linear ethylene/α-olefin random copolymer.

**3.** Composition according to claim 2, wherein (B1) has the following additional properties:

(4-1) an intrinsic viscosity (η), measured in decahydronaphtalene at 135°C, of 0.3-3.0 dl/g,
(5-1) a glass transition temperature (Tg) of not more than -50°C,
(6-1) a molecular weight distribution (Mw/Mn), determined by GPC, of not more than 3.0,
(7-1) a B-value, indicating the randomness of the copolymerized monomer sequence distribution, of 1.0-1.4, wherein $B = P_{OE}/(2P_O \times P_E)$, where $P_E$ is the molar fraction of the ethylene component, $P_O$ is the molar fraction of the /α-olefin component, and $P_{OE}$ is the proportion of the number of ethylene//α-olefin alternating sequences to all the dyad sequences; and
(8-1) a ratio gη* of the intrinsic viscosity (η) (property (4-1)) to the intrinsic viscosity $(\eta)_{blank}$, measured in decahydronaphtalene at 135°C, of a linear ethylene/propylene copolymer having the same weight-average molecular weight (measured by a light scattering method) as this copolymer and having an ethylene content of 70 mol-%, $(\eta)/(\eta)_{blank}$, of more than 0.95.

**4.** Composition according to claim 1, wherein (B1) has the following additional properties:

(4-1) an intrinsic viscosity (η), measured in decahydronaphtalene at 135°C, of 0.3-3.0 dl/g,

(5-1) a glass transition temperature (Tg) of not more than -50°C,

(6-1) a molecular weight distribution (Mw/Mn), determined by GPC, of not more than 3.0,

(7-1) a B-value, as defined in claim 3, of 1.0-1.4; and

(8-1) a ratio gη*, as defined in claim 3, of 0.2-0.95.

**5.** Composition according to any of claims 1 to 4, wherein (B2) further has the following properties

(3-2) a B-value of 1.0-1.3,

(4-2) a melting point Tm, measured by a differential scanning calorimeter, of 60-140°C, and Tm and the 1-butene constituent unit content M (mol-%) satisfy the relation

$$-2.6M + 130 \leq Tm \leq -2.3M + 155,$$

and

(5-2) the degree of crystallinity C (%), measured by X-ray diffractometry, and the 1-butene constituent unit content M (mol-%) satisfy the relation

$$C \geq +1.5M + 75.$$

**6.** Use of a polypropylene resin composition according to any of claims 1 to 5 for the production of polymer films or sheets.

**Revendications**

**1.** Composition de résine de polypropylène comprenant

(a) 50 à 99 % en poids d'une résine de polypropylène (A) et
(b) 50 à 1 % en poids d'un composant de type caoutchouc (B) comprenant

b1) un copolymère statistique d'éthylène (B1) d'éthylène et d'une $\alpha$-oléfine en $C_{3-20}$, et présentant les propriétés suivantes :

(1-1) une masse volumique de 0,850 à 0,900 g/ $cm^3$,
(2-1) un indice de fluidité à l'état fondu (norme ASTM D 1238, 190 °C, charge de 2,16 kg) de 0,1 à 30 g/10 min, et
(3-1) un degré de cristallinité, mesuré par diffractométrie des rayons X, de moins de 40 % ; et

b2) un copolymère statistique propylène/1-butène (B2) contenant 50 à 95 % en moles de motifs constitutifs dérivés du propylène et 5 à 50 % en moles de motifs constitutifs dérivés du 1-butène, et présentant les propriétés suivantes :

(1-2) un indice de fluidité à l'état fondu (norme ASTM D 1238, 230 °C, charge de 2,16 kg) de 0,1 à 50 g/10 min,
(2-2) une distribution de masse moléculaire (Mp/Mn) déterminée par (chromatographie par perméation de gel) (GPC), ne dépassant pas 3,0, et
(3-2) une valeur B, indiquant le caractère statistique de la distribution des séquences de monomères copolymérisés, de 1,0 à 1,5, sachant que $B = P_{12}/(2P_1 \times P_2)$ où $P_1$ représente la fraction molaire du premier monomère, $P_2$ représente la fraction molaire du second monomère et $P_{12}$ représente la proportion des séquences premier monomère-second monomère par rapport à toutes les séquences de diades ;

et le rapport pondéral (B1)/(B2) du copolymère statistique d'éthylène (B1) au copolymère statistique propylène/1-butène (B2) dans le composant de type caoutchouc (B) est situé dans la gamme allant de 95/5 à 20/80.

**2.** Composition selon la revendication 1, dans laquelle (B1) est un copolymère statistique éthylène/ $\alpha$-oléfine linéaire.

**3.** Composition selon la revendication 2, dans laquelle (B1) présente les propriétés supplémentaires suivantes :

(4-1) une viscosité intrinsèque ($\eta$), mesurée dans le décahydronaphtalène à 135 °C, de 0,3 à 3,0 dl/g,
(5-1) une température de transition vitreuse (Tv) ne dépassant pas -50 °C,
(6-1) une distribution de masse moléculaire (Mp/Mn), déterminée par GPC, ne dépassant pas 3,0,
(7-1) une valeur B, indiquant le caractère statistique de la distribution des séquences de monomères copolymérisés, de 1,0 à 1,4, sachant que $B = P_{OE}/(2P_O \times P_E)$ où $P_E$ représente la fraction molaire du composant éthylène, $P_O$ représente la fraction molaire du composant /$\alpha$-oléfine, et $P_{OE}$ représente la proportion du nombre de séquences alternées éthylène//$\alpha$-oléfine par rapport à toutes les séquences de diades ; et
(8-1) un rapport g$\eta$* de la viscosité intrinsèque ($\eta$) (propriété (4-1)) à la viscosité intrinsèque $(\eta)_{témoin}$, mesuré dans le décahydronaphtalène à 135 °C, d'un copolymère éthylène/propylène linéaire présentant la même masse moléculaire moyenne en poids (mesurée par un procédé de diffusion de la lumière) que ce copolymère et présentant une teneur en éthylène de 70 % en moles, $(\eta)/(\eta)_{témoin}$, de plus de 0,95.

4. Composition selon la revendication 1, dans laquelle (B1) présente les propriétés supplémentaires suivantes :

(4-1) une viscosité intrinsèque (η), mesurée dans le décahydronaphtalène à 135 °C, de 0,3 à 3,0 dl/g,
(5-1) une température de transition vitreuse (Tv) ne dépassant pas -50 °C,
(6-1) une distribution de masse moléculaire (Mp/Mn), déterminée par GPC, ne dépassant pas 3,0,
(7-1) une valeur B, telle que définie dans la revendication 3, de 1,0 à 1,4 ; et
(8-1) un rapport gη*, tel que défini dans la revendication 3, de 0,2 à 0,95.

5. Composition selon l'une quelconque des revendications 1 à 4, dans laquelle (B2) présente encore les propriétés suivantes :

(3-2) une valeur B de 1,0 à 1,3,
(4-2) un point de fusion Tf, mesuré à l'aide d'un calorimètre différentiel, de 60 à 140 °C, et Tf et la teneur M (% en moles) en motifs constitutifs 1-butène satisfont la relation

$$-2{,}6M + 130 \leq Tf \leq -2{,}3M + 155,$$

et
(5-2) le degré de cristallinité C (%), mesuré par diffractométrie des rayons X, et la teneur M (% en moles) en motifs constitutifs 1-butène satisfont la relation

$$C \geq +1{,}5M + 75.$$

6. Utilisation d'une composition de résine de polypropylène selon l'une quelconque des revendications 1 à 5 pour la production de feuilles ou de films de polymère.

## Patentansprüche

1. Polypropylenharz-Zusammensetzung, umfassend

(a) 50 bis 99 Gew.% eines Polypropylenharzes (A) und

(b) 50 bis 1 Gew.% eines Gummibestandteils (B), umfassend

(b1) ein statistisches Ethylen-Copolymer (B1) aus Ethylen und einem $C_{3-20}$-α-Olefin mit den folgenden Eigenschaften:

(1-1) eine Dichte von 0,85 bis 0,9 g/cm$^3$,
(2-1) eine Schmelzflussrate (ASTM D 1238, 190°C, 2,16 kg Beladung) von 0,1 bis 30 g/10 min. und
(3-1) einen Grad der Kristallinität, gemessen durch Röntgendiffraktometrie, von weniger als 40 %; und

(b2) ein statistisches Propylen/1-Buten-Copolymer (B2), enthaltend 50 bis 95 mol-% an konstituierenden Einheiten, abgeleitet von Propylen, und 5 bis 50 % an konstituierenden Einheiten, abgeleitet von 1-Buten, und mit den folgenden Eigenschaften:

(1-2) eine Schmelzflussrate (ASTM D 1238, 230°C, 2,16 kg Beladung) von 0,1 bis 50 g/10 min.
(2-2) eine Molekulargewichtsverteilung (Mw/Mn), bestimmt durch GPC, von nicht mehr als 3, und
(3-2) einen B-Wert, der die Statistik der copolymerisierten Monomersequenzverteilung angibt, von 1 bis 1,5, worin $B = P_{12}/(2P_1 \times P_2)$ ist, worin $P_1$ die molare Fraktion des ersten Monomers ist, $P_2$ ist die molare Fraktion des zweiten Monomers und $P_{12}$ ist das Verhältnis der ersten Monomer-zweiten Monomer-Sequenzen zu allen zweiwertigen Sequenzen;

und wobei das Gewichtsverhältnis (B1)/(B2) des statistischen Ethylen-Copolymers (B1) zu dem statistischen Propylen/1-Buten-Copolymer (B2) in dem Gummibestandteil (B) im Bereich von 95/5 bis 20/80 liegt.

**2.** Zusammensetzung gemäss Anspruch 1, wobei (B1) ein statistisches lineares Ethylen/α-Olefin-Copolymer ist.

**3.** Zusammensetzung gemäss Anspruch 2, wobei (B1) die folgenden zusätzlichen Eigenschaften aufweist:

(4-1) eine intrinsische Viskosität (η), gemessen in Decahydronaphthalin bei 135°C, von 0,3 bis 3 dl/g, (5-1) eine Glasübergangstemperatur (Tg) von nicht mehr als -50°C,
(6-1) eine Molekulargewichtsverteilung (Mw/Mn), bestimmt durch GPC, von nicht mehr als 3,
(7-1) einen B-Wert, der die Statistik der copolymerisierten Monomersequenzverteilung angibt, von 1 bis 1,4, worin $B = P_{OE}/(2_{PO} \times P_E)$ ist, wobei $P_E$ die molare Fraktion des Ethylen-Bestandteils ist, $P_O$ ist die molare Fraktion des /α-Olefin-Bestandteils und $P_{OE}$ ist das Verhältnis der Zahl der Ethylen//α-Olefin-alternierenden Sequenzen zu allen zweiwertigen Sequenzen; und
(8-1) ein Verhältnis gη* der intrinsischen Viskosität (η) [Eigenschaft (4-1)] zu der intrinsischen Viskosität $(\eta)_{Leerwert}$, gemessen in Decahydronaphthalin bei 135°C, eines linearen Ethylen/Propylen-Copolymers mit dem selben gewichtsbezogenen durchschnittlichen Molekulargewicht (gemessen durch die Lichtstreuungsmethode) wie dieses Copolymer und mit einem Ethylengehalt von 70 mol-% von $(\eta)/(\eta)_{Leerwert}$ von mehr als 0,95.

**4.** Zusammensetzung gemäss Anspruch 1, worin (B1) die folgenden zusätzlichen Eigenschaften aufweist:

(4-1) eine intrinsische Viskosität (η), gemessen in Decahydronaphthalin bei 135°C von 0,3 bis 3 dl/g, (5-1) eine Glasübergangstemperatur (Tg) von nicht mehr als -50°C,
(6-1) eine Molekulargewichtsverteilung (Mw/Mn), bestimmt durch GPC, von nicht mehr als 3,
(7-1) einen B-Wert, wie in Anspruch 3 definiert, von 1 bis 1,4, und
(8-1) ein Verhältnis gη*, wie in Anspruch 3 definiert, von 0,2 bis 0,95.

**5.** Zusammensetzung gemäss einem der Ansprüche 1 bis 4, worin (B2) weiterhin die folgenden Eigenschaften aufweist:

(3-2) einen B-Wert von 1 bis 1,3,
(4-2) einen Schmelzpunkt (Tm), gemessen mit einem Kalorimeter mit Differentialabtastung von 60 bis 140°C, wobei Tm und der Gehalt M (mol-%) der 1-Buten-Bestandteil-Einheit dem Verhältnis

$$-2{,}6M + 130 \leq Tm \leq -2{,}3M + 155$$

und
(5-2) der Grad der Kristallinität C (%), gemessen durch Röntgendiffraktometrie und der Gehalt M (mol-%) der l-Buten-Bestandteilseinheit der Gleichung

$$C \geq +1{,}5M + 75$$

entsprechen.

**6.** Verwendung einer Polypropylenharz-Zusammensetzung gemäss einem der Ansprüche 1 bis 5 für die Herstellung von Polymerfilmen oder Blättern.